# EUROPÄISCHE PATENTANMELDUNG

(11) **EP 1 160 218 A2**
(43) Veröffentlichungstag der Anmeldung: **05.12.2001**
(21) Anmeldenummer: 01890024.1
(22) Anmeldetag: 30.01.2001
(51) Int. Cl.: C04B 7/24, C04B 7/52

(54) **Verfahren zur Herstellung eines Bindemittels**

(30) Priorität: 22.05.2000 AT 8912000
(71) Anmelder: Buzetzki, Elvira, 7041 Wulkaprodersdorf (AT)
(72) Erfinder: Buzetzki, Elvira, 7041 Wulkaprodersdorf (AT)
(74) Vertreter: Kliment, Peter

(57) **Zusammenfassung**

Verfahren zur Herstellung eines anorganischen Bindemittels für hydraulische erhärtende Masse, insbesondere betonartige Massen, bei dem Stoffe, die Kieselsäure, Tonerde, Eisenoxid und Kalk enthaltende Stoffe vermengt, gemahlen und bis zur Sinterung gebrannt werden. Um ein solches Bindemittel mit geringem Aufwand herstellen zu können, ist vorgesehen, dass Hausmüll vorzerkleinert, homogenisiert und mit kalziumhaltigen Additiven, wie Dolomit, Calcit, Kalkmergel, Mergel u.dgl. sowie mit Aluminiumoxid enthaltenden Zuschlagstoffen, wie Korundschleifstaub, Tonmergel, Klinker u.dgl., vermischt und verbrannt wird. Um den Einsatz des Verfahrens auch bei Rostfeuerung oder in Wirbelschichtöfen zu ermöglichen, wird dem nach der Verbrennung erhaltenen Produkt vor dem Aufmahlen bis zu 40 Gew.%, vorzugsweise ca. 10 Gew.% Gerüstsilikate, z.B. Tuff, beigemengt und das erhaltene Produkt auf eine Korngröße kleiner 0,063mm aufgemahlen.

## Beschreibung

Die Erfindung bezieht sich auf ein Verfahren zur Herstellung eines Bindemittels gemäß dem Oberbegriff des Anspruches 1.

Einer der wichtigsten Baustoffe ist Beton. Dieser ist in der Regel eine Mischung aus Wasser, Sand und Kies, sowie Zement als Bindemittel.

Das wichtigste Bindemittel für Beton ist Portlandzement der auf 1 Gewichtsanteil löslicher Kieselsäure (SiO₂) + Tonerde (Al₂O₃) + Eisenoxid (Fe₂O₃) mindestens 1,7 Gewichtsanteile Kalk (CaO) enthält. Diese Rohstoffe werden bei den bisher bekannten Verfahren gemischt und gemahlen und bis zur Sinterung gebrannt und die entstehenden Klinker wieder vermahlen. Weitere Sorten von Zementen sind Eisenportlandzement, Hochofenzement und Traßzement, die verschiedene Zuschlagstoffe zum Portlandzement enthalten. Ein Sonderzement ist Tonerdezement.

Zemente werden in drei Güteklassen angeboten. Die hochwertigen Zemente 375 und 475 unterscheiden sich vom normalen Zement 275 durch eine höhere Mahlfeinheit, die ein schnelleres Erhärten (nicht Abbinden) bewirkt und an genormten Prüfkörpern nach 28 Tagen die durch die Zahlen gekennzeichneten Druckfestigkeiten ergibt. Die höheren Anfangsfestigkeiten der hochwertigen Zemente ermöglichen ein früheres Ausschalen und damit einen rascheren Baufortschritt.

Zur Herstellung von Portlandzement werden die kalk- und tonreichen Ausgangsmaterialien in Drehrohröfen auf 1450°C erhitzt. Dadurch ergeben sich hochbasische Verbindungen des Kalziumoxids (58-66%) mit Siliziumdioxid (18-26%) in Form von Kalziumsilikaten, Aluminiumoxid (4-12%) in Form von Kalziumalumonaten und Eisenoxid (2-5%) in Form von Kalziumferriten, sowie geringe Mengen an Mangan- und Magnesiumoxid, welche Verbindungen die Hauptbestandteile des Portlandzements bilden.

Der Nachteil dieses Verfahrens zur Herstellung eines Bindemittels der oben erwähnten Art liegt in dem Umstand, daß dazu ein hoher Energieaufwand erforderlich ist und die angegebenen Rohstoffe zu ihrer Gewinnung einen erheblichen Aufwand erfordern.

Es wurde daher vorgeschlagen, (Haushalts-)Müll als Ausgangsprodukt zur Herstellung eines Bindemittels zu verwenden.

So schlägt etwa DE 2 338 318 vor, (Haushalts-)Müll mit dem Ziel zu verbrennen, den Müll in einem Verfahren zur Herstellung von hydraulisch abbindbarem Material, insbesondere Portlandzement, zu verwerten. Insbesondere wird dabei Müll im zerkleinerten oder gepulverten Zustand in einem Drehrohrofen gemeinsam mit basischen Mineralien, beispielsweise Portlandzement-Ausgangsmaterial, verbrannt.

DE 406 191 C offenbart die Verbrennung von granuliertem und feingemahlenen Hausmüll, dem Ergänzungen an Kalk, Tonerde und Kieselsäure beizufügen sind. Das Endprodukt kann unmittelbar als hydraulisches Bindemittel benutzt werden.

DE 418 354 C schlägt eine leichte Variation dieses Verfahrens vor, bei dem der vom Groben getrennte Feinmüll in Mischung mit Brennstoff und Kalk brikettiert dem Schmelzofen zugeführt wird.

DE 267 192 C beschreibt ein Verfahren zur Herstellung von hydraulischen Zementen aus Müll unter Verwendung von Zusätzen wie Kalk, Ton, Silikaten und diversen Salzen, wie etwa Aluminium- oder Magnesiumsalzen.

In AT 335 330 B wird schließlich von einem Verfahren zur Herstellung von Portlandzementklinker in einem Drehrohrofen unter Einsatz von Stadtmüll und von für die Gewinnung von Portlandzementklinker üblichen Rohmaterialien gesprochen.

Der Nachteil dieser Verfahren besteht allerdings darin, dass die Verwendung von zerkleinertem Müll im Rahmen weitestgehend unveränderter Produktionsverfahren zur Herstellung von Bindemittel vorgeschlagen wird. Dies macht es insbesondere notwendig, bei Herstellungsprozessen unter Verwendung von zerkleinertem Müll vorzugsweise Drehrohröfen zu verwenden, da die unterschiedlichen Charakteristika der bei Rostfeuerung oder in Wirbelschichtöfen ablaufenden Sinterungsvorganges die Eigenschaften des entstehenden Bindemittels nachteilig verändern. Das stellt eine wesentliche Einschränkung der praktischen Umsetzbarkeit des Verfahrens dar, weil dieses Verfahrens besonders dann interessant ist, wenn auch bereits bestehende Anlagen auf die Verwendung von Müll zur Bindemittelerzeugung umgestellt werden können. In solchen Fällen ist es vorteilhaft, wenn vorhandene Öfen übernommen werden können, weil die Kosten einer umfangreichen Umrüstung die ökonomischen Vorteile des Verfahrens gemäß des Oberbegriffes von Anspruch 1 beeinträchtigen.

Ziel der Erfindung ist es, diesen Nachteil zu vermeiden und ein Verfahren zur Herstellung eines Bindemittels der eingangs erwähnten Art vorzuschlagen, bei dem bei unterschiedlichen Feuerungsarten mit einem geringen Energieeinsatz das Auslangen gefunden wird.

Erfindungsgemäß wird dies bei einem Verfahren der eingangs erwähnten Art durch die kennzeichnenden Merkmale des Anspruches 1 erreicht. Durch die genannten Maßnahmen können nachteilige Effekte aufgrund veränderter Sinterungsprozesse in unterschiedlichen Feuerungsanlagen nicht nur korrigiert, sondern die Eigenschaften des Produktes im Vergleich zu üblichen Herstellungsverfahren sogar verbessert werden. So ergibt sich durch die Merkmale des Anspruches 1 eine um ca. 25% erhöhte Druckfestigkeit verglichen mit Beton, der mit herkömmlichen Zementen hergestellt wurde, wobei der mit dem nach dem Anspruch 1 erhaltenen Bindemittel hergestellte Beton auch keine Rißbildung und eine gegenüber Beton mit herkömmlichem Zement um 50% geringere Expansion zeigt.

Eine weitere Verbesserung des Verfahrens zur Herstellung von Bindemittel unter Verwendung von zerkleinertem Müll ergibt sich durch die Einhaltung der im Anspruch 2 und 3 hervorgehobenen Maßnahmen.

Die vorgeschlagenen Maßnahmen ermöglichen nicht nur die Verwendung von Verfahren zur Herstellung von Bindemittel unter Verwendung von zerkleinertem Müll in neu projektierten Anlagen, sondern auch in geringfügig adaptierten Altanlagen.

Weitere Details des erfindungsgemäßen Verfahrens sollen im folgenden beschrieben werden.

Typischer Hausmüll enthält in Gew.% meist 59-69% Siliziumoxid, 4.9-7,8% Eisenoxid, 5,1-6,3%Aluminiumoxid und 8,3-10,3% Kalk und eignet sich daher zur Herstellung eines anorganischen Bindemittels für betonartige erhärtende Massen.

Dabei kann die Herstellung des Bindemittels in Müllverbrennungsanlagen erfolgen, die mit speziellen Brennstoffen aus Müll (BRAM) gefahren wird. Bei diesen ergeben sich in Gew.% 18-26% Siliziumoxid, 2-5% Eisenoxid, 4-12% Aluminiumoxid und 58-66% Kalk, sowie 2-5% Magnesiumoxid.

Die Brennbett-Temperatur beträgt dabei mindestens 950°C und der Heizwert des Mülls mindestens 13MJ/kg. Letzterer Umstand stellt sicher, daß praktisch keine zusätzliche Primärenergie zur Verbrennung zugesetzt werden muß.

Als Additive können calciumhältige Abfälle aus der Industrie oder kalziumhältiges Gestein, wie Dolomit, Calcit, Kalkmergel u.dgl. zugesetzt werden, die leicht verfügbar sind.

Bei den Zuschlagstoffen können ebenfalls Industrieabfälle, wie Korundschleifstäube, aber auch Tonmergel, Klinker u.dgl. verwendet werden.

Im allgemeinen ergibt sich bei dem erfindungsgemäßen Verfahren ein Glühverlust von ca. 5% ein Sulfatgehalt von 4%, ein Chloridgehalt von ca. 3%, ein Blaire Wert von 5000cm²/g, ein Basengrad von p>2, wobei die Berechnung des Basengrades p = (CaO+MgO+Al₂O₃+Fe₂O₃) SiO₃ ergibt.

Nach dem erfindungsgemäßen Verfahren ergibt sich ein Bindemittel, das gegenüber den herkömmlich hergestellten Zementen eine erhöhte Druckfestigkeit aufweist und eine deutlich geringere Neigung zur Rißbildung zeigt und auch geringere Expansion aufweist.

Durch den sich während des Prozesses ergebenden Ionenaustausch und durch Sorbtion werden allfällig im Hausmüll enthaltene Schadstoffe in den Verband eingebunden und sind daher als dem Bindemittel und dem damit hergestellten Beton schwer auslaugbar und stellen daher keine nennenswerte Gefahr für die Umwelt dar. Auf Rohstoffe, deren Gewinnung mit einem erheblichen Aufwand verbunden ist, kann weitgehend verzichtet werden. Außerdem wird gleichzeitig die Problematik der Lagerung und Behandlung des Hausmülls weitgehend entschärft. Da die Energie im wesentlichen durch den Hausmüll selbst bereitgestellt wird, ergeben sich auch sehr erhebliche Energieeinsparungen bei der Herstellung des Bindemittels.

## Patentansprüche

1. Verfahren zur Herstellung eines anorganischen Bindemittels für hydraulische erhärtende Masse, insbesondere betonartige Massen, bei dem Stoffe, die Kieselsäure, Tonerde, Eisenoxid und Kalk enthaltende Stoffe vermengt, gemahlen und bis zur Sinterung gebrannt werden und bei dem Hausmüll vorzerkleinert, homogenisiert und mit kalziumhaltigen Additiven, wie Dolomit, Calcit, Kalkmergel, Mergel u.dgl. sowie mit Aluminiumoxid enthaltenden Zuschlagstoffen, wie Korundschleifstaub, Tonmergel, Klinker u.dgl., vermischt und verbrannt wird, **dadurch gekennzeichnet, dass** vor dem Aufmahlen des nach der Verbrennung erhaltenen Produktes bis zu 40 Gew.%, vorzugsweise ca. 10 Gew.% Gerüstsilikate, z.B. Tuff, beigemengt wird und das erhaltene Produkt auf eine Korngröße kleiner 0,063mm aufgemahlen wird.

2. Verfahren nach Anspruch 1, **dadurch gekennzeichnet, dass** vor dem Aufmahlen des nach der Verbrennung erhaltenen Produktes bis zu 10 Gew.%, vorzugsweise ca. 5 Gew.% CaSO₄ beigemengt wird.

3. Verfahren nach Anspruch 1 oder 2, **dadurch gekennzeichnet, dass** die Verbrennung überstöchiometrisch gefahren wird.
